# EUROPEAN PATENT SPECIFICATION

(11) **EP 1 738 650 B1**
(45) Date of publication and mention of the grant of the patent: **16.02.2011**
(21) Application number: 06115507.3
(22) Date of filing: 14.06.2006
(51) Int. Cl.: A23C 9/13, A23G 9/46, A23G 9/34

(54) **Stable aerated food products containing oil and cyclodextrin**
Stabile, aufgeschlagene, Öl und Cyclodextrin enthaltende Lebensmittelprodukte
Produits alimentaires stables fouettés contenant de l'huile et de la cyclodextrine

(30) Priority: 30.06.2005 US 172520
(43) Date of publication of application: 03.01.2007
(73) Proprietor: Kraft Foods Global Brands LLC, Northfield, IL 60093 (US)
(72) Inventor: Kim, Dennis Ann, Palatine, IL 60074 (US)
(74) Representative: Murray, Adrian D'Coligny

(56) References cited:
- WO-A-2004/016101
- US-A- 5 264 226
- DATABASE WPI Week 199240 Derwent Publications Ltd., London, GB; AN 1992-328946 XP002399658 & JP 04 237477 A (EZAKI GLICO CO) 25 August 1992 (1992-08-25)
- PATENT ABSTRACTS OF JAPAN vol. 018, no. 678 (C-1290), 20 December 1994 (1994-12-20) & JP 06 269256 A (NISSHIN OIL MILLS LTD:THE; others: 01), 27 September 1994 (1994-09-27)
- PATENT ABSTRACTS OF JAPAN vol. 006, no. 122 (C-112), 7 July 1982 (1982-07-07) & JP 57 050857 A (OOTA TOSHIYUKI; others: 01), 25 March 1982 (1982-03-25)
- PATENT ABSTRACTS OF JAPAN vol. 006, no. 231 (C-135), 17 November 1982 (1982-11-17) & JP 57 132851 A (TAKEDA YAKUHIN KOGYO KK), 17 August 1982 (1982-08-17)
- DATABASE WPI Week 198016 Derwent Publications Ltd., London, GB; AN 1980-28516C XP002399659 & JP 55 034042 A (LOTTE CO LTD) 10 March 1980 (1980-03-10)

## Description

### Field of the Invention

This invention relates to stable aerated food products comprising oils and cyclodextrin.

### Background of the Invention

Aerated foods are commercially significant as food manufacturers seek to exploit the uniqueness and versatility of gas bubbles as food ingredients. The benefits of aerated foods relate to improved texture (i.e., softer, smoother), enhanced flavor delivery, easier mastication, and/or altered rheology. The last-mentioned benefit allowing original fluid ingredients to be molded and set into more desired or convenient shapes for packaging, scooping, composite food usage, consumption, or the like. The particular method used to aerate foods may be specific to one or more food types. Aerated liquid food products, such as edible foams and emulsions, are protein stabilized and are generally formed by bubbling, whipping, shaking, or various other gas incorporating methods. For instance, whipping or shaking of low-medium viscosity liquids to entrap air has been used to prepare whipped cream, beaten egg whites, cake batter, milk shakes, frappes, and the like. Gas injection (e.g., air, nitrogen, or nitrous oxide injection) also has been used in the preparation of instant whipped cream. Aerated foods such as foams form as a result of rapid diffusion of protein to the air-water interface, which reduces the surface tension, necessary for foam formation. Then the protein partially unfolds, which encapsulates air bubbles and creates the association of protein molecules, leading to an intermolecular cohesive film with a certain degree of elasticity.

After creating aerated foods, formulators must stabilize the bubbles because the foam system tends to destabilize. Bubbles can burst or coalesce if the bubble interface thins excessively. Surface active agents have been used to stabilize aerated foods. Emulsifiers and proteins are both surface active, reducing the surface tension at an interface and so alleviating the thermodynamic tendency to minimize the interfacial area. However, they have very different chemical structures, and the mechanism by which they stabilize aerated foods differs. Emulsifiers stabilize bubbles by the Gibbs-Marangoni effect, whereby if local thinning occurs, surfactant rapidly diffusos into the depleted area, bringing liquid in With it to re-thicken the thinned region, See, e.g., McClements, Food Emulsions: Principles, Practice, and Techniques (1999). Proteins are known to reduce the surface tension at the air-water interface and stabilizes the foam lamella/thin film. Proteins have low rates of surface lateral diffusion, and stabilize bubbles primarily by forming a rigid layer of interlined proteins at the interface. Another common method to stabilize aerated foods is to increase the viscosity of the continuous phase. Viscosity can be increased by the addition of hydrocolloids, sugar, fibers, or other thickeners. Increasing the viscosity of the continuous phase reduces the velocity of a bubble creaming to the top as well as the rate of thin film drainage, thereby increasing the foam stability.

Whipped cream in particular is an aerated food that is produced in large volumes by food manufacturers. Whipped cream, and similar aerated food products such as mousses, have a pleasing textural smoothness and mouthfeel. Whipped cream comprises a dispersion of gas bubbles that are surrounded by partially coalesced fat at the air/serum interface and are supported by high viscosity in the serum phase. Whipped creams are made using a process of controlled partial coalescence of cream emulsions during whipping and air incorporation to form complex structures which are both protein-stabilized emulsions and fat-stabilized foams. Cream typically only doubles in volume when aerated successfully, which is less than other foods such as egg-white foams. Depending on conditions, especially temperature, cream can be difficult to whip into a foamed product and may remain a liquid or separate into a mixture of butter and buttermilk. As generally known, fat globules in cream can aid the survival of foams. The proteins dissolved in the liquid phase stabilize the whipped cream. The fat globules act as a thickener and interact with bubble walls in a useful manner. In addition to fat content, several other factors affect the structural properties of whipped cream, including processing conditions, and the addition of stabilizers and emulsifiers. Foam instability can arise from a number of mechanisms, such as thermodynamic instability (unduly high process, storage, and/or handling temperatures); coalescence, (decrease in the number and an incraasa in the size of individual globules); flocculation, (clustering of individual globules into a coherent unit in which the size and identity of individual globules are retained); size reduction of fat globules over the point at which they resist partial coalescence and inhibit stiff foam formation, and so forth. Whipping of cream into stable foam rolies on a combination of destabilization and structure-building mechanisms, Destabilization may occur as the milk fat globule membranes are disrupted in the presence of shear and partial coalescence follows as a consequence.

Previously, solid crystals of fat have been used to stabilize whipped cream and similar aerated fluid food products. Generally, it has been thought that structural stability of fat-containing aerated food products, including not only whipped cream but also other food like ice cream, breads, cookies, non-dairy whipped toppings, and the like, is reliant upon the total lipid content and the presence of a lipid having some solid characteristics (i.e., fat crystals which are at least partially solid at the temperature of aeration/whipping). Thus, it previously has been reported that an aerated/foam product is less stable, and the lifetime of air bubbles shortened, in the presence of liquid oil (Walstra et al, "Dispersed Systems: Basic Considerations," in Fennema, Food Chemistry (1996); Walstra, Physical Chemistry of Foods (2003); Damodaran et al, Food Proteins and Their Applications (1997)). Many commercial products contain blends of mono-; di-, and/or triglycerides which are marketed as anti-foamers or foam depressants type components (e.g., antifoam E 100 conc., Bayer Chemicals/LanXess Co.). Vegetable oils also have been used as antifoaming agents (Brandt, "Emulsifiers in Baked Goods" in Food Product Design (Feb. 1996)).

It would be desirable to provide aerated food products which can be stabilized without the use of solid fats since such fats tend to be high-melting saturated fatty acids or trans fatty acids. Fats are composed mainly of triglycerides comprising fatty acid residues bonded to a glycerol backbone. These fatty acids fall into three categories: saturated, monounsaturated, and polyunsaturated. Saturated fatty acids generally are not as desirable as a food component from a dietary standpoint. Similarly, trans-fatty acids generally are not as desirable as their unsaturated counterparts. The challenge, however, is maintaining adequate functionality (especially foam stability), procassability, and sensory attributes in aerated foods if attempts are made to replace solid fats with a different stabilizing system.

Cyclodextrins have been used previously in methods to reduce the levels of target compounds (e.g., free fatty acids, cholesterol, or triglycerides) in food products. In such methods, cyclodextrin is blended with the food product so as to complex or otherwise interact with the target compounds; the cyclodextrin, including the complexed target compounds, is then removed (typically using centrifugation techniques). The resulting products that are essentially cyclodextrin free and have reduced levels of free fatty acids, cholesterol, and triglycerides as compared to a like food product that has not been treated. U.S. Patent Publication 2004/0120984 (June 24, 2004) disclose a method of reducing the bio-availability of fat in food products using alpha-cyclodextrin at an alpha-cyclodextrin to fat weight ratio of about 1:20 to about 1:3 (equivalent to about 0.05:1 to about 0.33:1).

Cyclodextrins are a family of cyclic polymers of glucose produced by enzymatic digestion of cornstarch with a cyclodextrin glycosyltransferase. Cyclodextrins are cyclic, non-reducing oligosaccharides composing of six, seven or eight glycopyranose units corresponding to alpha-, beta- and gamma-cyctodextrin, respectively, and assume a toroid or truncated cone conformation in aqueous solution. The molecules have a hydrophobic interior and hydrophilic exterior forming an internal pore. The different polymer lengths yield different pore sizes. The cyclodextrins have different solubility in water; for example, at about 25°C the solubility is about 14.5 g/100mL water for alpha-cyclodextrin; about 1.85 g/100mL water for beta-cyclodextrin; and about 23.2 g/100mL water for gamma-cyclodextrin (Szejtli, Cyclodextrins and Their Inclusion Complexes (1982)). Solutions of cyclodextrins, however, do not increase the viscosity of the aqueous phase. Cyclodextrins are typically manufactured by the conversion of amylose with the enzyme cyclodextrin glycosyltransferase and then separated and purified through precipitation techniques. Properties of beta- and gamma-cyclodextrins have been used in a variety of fields. For example, U.S. Patent 6,025,510 describes stabilizing vegetable oils by mixing gamma-cyclodextrin with vegetable oil to form a cyclodextrin/vegetable oil complex, and indicates that the stabilization is better than that obtained using alpha- or beta-cyclodextrin. Chemical Abstract CA:108:192767y describes stabilization of gamma-linolenic acid in evening primrose oil by inclusion of beta-cyclodextrin. Chemical Abstract CA:107:133049x describes milk or powdered milk containing beta-cyclodextrin complexes of triacylglycerols with a proportion of 70 percent of gamma-linolenic acid.

### Summary of the Invention

The invention provides an aerated food composition comprising: 2 to 4 percent protein, 2 to 3.5 percent oil, 2 to 10 percent cyclodextrin and 82.5 to 94 percent water (total) and wherein the composition contains at least 0.65:1 molar ratio of cyclodextrin to oil. The cyclodextrin component facilitates the incorporation of liquid oils into aerated food products. It allows for the generation of a more stable and greater overrun protein-stabilized foam in the presence of the liquid oils as compared to similar oil-containing aerated food products lacking the cyclodextrin. For the purposes of this invention, cyclodextrins include alpha-cyclodextrin, beta-cyclodextrin, and gamma-cyclodextrin.

Preferably, the stable aerated food composition is provided as an oil-in-water emulsion. The gas weight in the aerated compositions is essentially negligible. The present invention also relates to whippable compositions containing components in the above-indicated respective amounts.

The aerated food composition may comprise, for example, a dairy product, such as whipped cream, mousse, yogurt, cream cheese, and ice cream, salad dressing, mayonnaise, confectionary, beverages (e.g., cappuccinos and lattes) and the like. In one embodiment, the aerated food product is whipped cream which is stable in the temperature range of about 35 to about 70°F (about 1.6 to about 21 °C).

### Detailed Description

Aerated food compositions are provided which allow for the formation of protein stabilized foam-based products in the presence of liquid oils/lipids. The aerated food compositions generally comprise protein, oil, and cyclodextrin in an amount effective to provide a stable aerated food material. These compositions produce edible foams that have greater overrun and foam stability in the presence of liquid oils than foams lacking the cyclodextrin. The foams have good stiffness over their shelf-life. The invention is particularly useful when applied to foods that are aerated during manufacturing and require stabilization to prevent the foam from collapsing during distribution and merchandising. This invention is also particularly useful in preparing powdered mix in which the consumer will use to prepare a whipped product.

For purposes herein, the following terms have meanings as follows. "Lipids" refers to fats, and fat mimetic materials. "Fats" are glycerides, free fatty acids, or a combination thereof. The "glycerides" may be triacylglycerides ("triglycerides"), diacyglycerides ("diglycerides"), derivatives thereof, or their mixtures with each other or in combination with monoacylglyce rides ("monoglycerides"). The fatty acid residues may be saturated or unsaturated, or both types may be bonded to a common glycerol backbone. The fatty acids or acid residues of glycerides may include saturated or unsaturated C5 to C25 fatty acids. The unsaturated fatty acids or acid residues of glycerides may be monounsaturated, polyunsaturated, or a combination thereof. "Fat mimetics" refers to edible, but not necessarily digestible, compounds having similar functional attributes of fats in aerated foods, and may include liquid polyol fatty acid polyesters such as those described in U.S. Patent 4,005,195. "Sterols" refers to unsaturated steroids with most of the skeleton of cholestane containing a 3-beta-hydroxyl group and an aliphatic side chain of 8 or more carbon atoms attached to position 17. They are lipids resistant to saponification and are found in an appreciable quantity in all animal and vegetal tissues. These unsaponifiable lipids may include one or more of a variety of molecules belonging to 3-hydroxy steroids, they are C27 to C30 crystalline alcohols. These lipids can be classed as triterpenes as they derive from squalene which gives directly by cyclization, unsaturation and 3-beta-hydroxylation, lanosterol in animals or cycloartenol in plants. Sterols include, for instance, phytosterols and phytostanols.

"Oils" refers to "liquid lipids", inclusive of liquid fats, liquid sterols, and liquid fat mimetics. Oils included in food products treated according to embodiments herein generally are flowable and non-crystalline at the temperature(s) at which aeration/foaming of the food composition is conducted. These temperatures preferably exceed at least about 0°C (32°F). The oils may be naturally-derived or chemically synthesized. The natural oils may be obtained from vegetable or animal sources. "Foam stability" refers to an aerated food's resistance to foam breakdown or disruption. Foams may collapse negligibly (clearly indicating stability), gradually, or rapidly (clearly indicating instability), depending on the circumstances. Arbitrary standards are used to assess the gradually declining foams. For purposes of this invention, a foam's stability can be evaluated by the rate of foam drainage. The smaller the rate of drainage, the more relatively stable the foam, and vice versa. The rate of drainage differentiating stable and unstable foams also can vary between different aerated food types. For purposes herein, a 100-g sample of a "stable" whipped dairy product, such as whipped cream, containing about 2 to about 4 percent protein and about 20 to about 30 percent fat should have a drainage rate of less than about 25 ml after standing for 2 hours at 24°C; unstable foams will have higher drainage rate and the foam will start to coarsen.

"Overrun" refers to the volume of gas added to the aerated product, and also is referred to as foaming capacity. It is measured according to the following equation: (weight of 100 ml food mix - weight of 100 ml foamed food)x100/(weight of 100 ml foamed food). It is reported as a percentage value. "Aerated" refers to the incorporation of a gas into a food material. For purposes herein, the gas is not particularly limited, and may be air, nitrogen, carbon dioxide, nitrous oxide, gas combinations, and so forth. "Stiffness" refers to stand-up properties of a foamed food.

Aerated food products of this invention particularly include whipped oil-in-water emulsion systems containing a protein source, an oil source (e.g., liquid oil), and cyclodextrin in an amount effective to allow a stable foamed product to be obtained. The relative amounts of these ingredients can be widely varied depending upon the end use, product stability, degree of whip, and the mouthfeel of the desired product. However, the relative amounts of the various ingredients will be within the following ranges to provide a stable aerated food composition: 2 to 4 percent protein, 2 to 3.5 percent oil, 82.5 to 94 percent water (total), and 2 to 10 percent cyclodextrin.

Methods for determining or calculating the amount of protein and fat in a food product are well known in the art. The weight of gas contained in the aerated compositions is essentially negligible. The present invention also relates to whippable compositions containing components in the above-indicated respective amounts.

A variety of optional additives may be included in the aerated food compositions to the extent they do not destabilize the foamed product. Carbohydrates, such as sweeteners, optionally may be added. Emulsifiers and supplemental stabilizers are not required to attain a stable foamed product, but optionally may be added. Other ingredients known to those skilled in the art may also optionally be employed to impart their characteristic effects to the whipped compositions of the present invention. Typical of such ingredients are flavoring agents, colorants, vitamins, minerals, preservatives, and the like. Suitable flavoring agents can be employed to impart vanilla, cream, chocolate, coffee, maple, spice, mint, butter, caramel, fruit, and other flavors. Additionally, the use of certain polyols such as sorbitol and mannitol can be employed to modify the mouthfeel of the topping. Furthermore, other additives such as phosphates and the like may be employed for their known functions.

The aerated food product provided may be an aerated dairy product, for example, whipping cream, cream cheese, mousse, yogurt, ice cream, salad dressing, mayonnaise, confectionary, and the like. The whipped product remains soft, scoopable or spoonable, and whey or other liquid present does not separate from the rest of the components. The aerated food product of this invention may be served immediately or packaged for later consumption. Packaging includes enclosure in plastic, paper, cardboard, or metal. The aerated food product may be packaged in bulk, multi-, or single serving packages.

The cyclodextrin component of the aerated food composition makes it possible to incorporate liquid oils into aerated food products in a stable manner. Even though they contain cyclodextrin, the edible aerated food products of this invention do not have reduced levels of fatty acids, cholesterol or triglycerides as compared to a like aerated food product lacking cyclodextrin. If assayed by bomb calorimetry, the aerated products produced by methods of the present invention will not have a reduction in caloric content as compared to a like aerated food product without the added cyclodextrin.

Cyclodextrins are commercially available in mixtures or isolated forms of alpha-, beta-, and gamma-cyclodextrin. The aerated food products of this invention also contain oil. The amount of oil generally will be sufficient to provide a stable foam which has good mouthfeel and yet, upon melting, does not leave an undesirable film on the palate. The aerated food composition contains at least 0.65:1 molar ratio of Cyclodextrin to oil, particularly 0.9:1 to about 5:1 molar ratio of cyclodextrin to oil, and more particularly 0.9:1 to about 4:1 molar ratio of cyclodextrin to oil. In a particular embodiment, the aerated food composition contains at least 0.65:1 molar ratio of alpha-cyclodextrin to vegetable oil (e.g., canola oil), particularly 0.9:1 to about 5:1 molar ratio of alpha-cyclodextrin to vegetable oil, and more particularly 0.9:1 to about 4:1 molar ratio of alpha-cyclodextrin to vegetable oil. Lower ratio values (i.e, lower amounts of cyclodextrin relative to oil content) have been found to result in unstable foams.

The oil component of the aerated food composition may be selected from the group consisting of glyceride, sterol, and fat mimetic. In one embodiment, the oil content of the stabilized aerated food composition may comprise fully saturated lipids and/or unsaturated lipids. In one embodiment, the oil component of the aerated food composition is a glyceride selected from the group consisting of a triacylglycerol, a diacylglycerol, and combinations thereof. These glycerides may be used in combination with a monoacylglycerol. Monoacylglycerol alone may not impart foaming stability in compositions of the invention, as indicated In the subsequent examples. In a particular embodiment, the use of cyclodextrin to stabilize aerated food products -allows for the increased or exclusive use of unsaturated fatty acids (free and/or as glyceride residues) as the oil component in place of solid fats, which are typically composed of high-melting saturated fatty acids, and/or trans fatty acids, while also improving the oxidative stability of the finished product. The ability to use liquid oils in place of solid fats due to the foam stability imparted by the cyclodextrin to the aerated product extends the use of common and specially oils into new foamed categories of foods. Aerated products also can be more quickly formulated as the processing used to incorporate a liquid lipid component is significantly simpler than needed for solid fat counterpart. In a particular embodiment, the oil component of the aerated food composition is selected from the group consisting of an unsaturated liquid fatty acid, a liquid glyceride with at least one unsaturated fatty acid residue, and combinations thereof. The oil may comprise an unsaturated liquid lipid, and particularly at least 50 percent unsaturated oils, and more particularly at least about 75 percent unsaturated oils.

The oil also may comprise fat mimetics such as edible, but not necessarily digestible, compounds having similar functional attributes of fats in aerated foods, and may include liquid polyol fatty acid polyesters such as those described in U.S. Patent 4,005,195. Where the oil comprises glycerides, it will be appreciated that diacylglycerol and derivatives thereof also may be advantageously used in lieu of or in combination with triglycerides, such as diethel diacylglycerol (ATM), or commercial products such as ENOVA™ brand oil (ADM Kao LLC, Decatur, IL).

The present invention does not categorically exclude the presence of solid fats or fat crystals in the aerated food compositions, but it will be appreciated that they need not be present in order to form stable oil-containing aerated products. Preferably, the level of such solid fats or fat crystals is minimized (e.g., less than about 10 percent) and more preferably is essentially zero.

Protein source materials include, for example, casein, sodium caseinate, soy protein, egg white protein, egg yolk protein, milk whey protein, fish protein, cottonseed protein, sesame protein, meat protein, and the like as well as combinations thereof, and the like. Non-fat dried milk is a preferred protein source.

It will be appreciated that the water content of the compositions can be derived from various ingredients (e.g., dairy sources such as milk, skim milk, and the like) and/or may be added as a separate ingredient.

A carbohydrate, if used, is generally employed in the composition in amount providing a desired sweetness. Thus, sugars such as sucrose, dextrose, glucose, lactose, maltose, invert sugar, and mixtures thereof may be utilized. Some carbohydrates such as dextrose may also be employed for their water binding characteristics. Other carbohydrates such as starches can be added to modify the consistency, if desired.

Emulsifiers are optional ingredients of the aerated compositions of the present invention and can be added in amounts on the same order as in the prior art oil-in-water emulsions. A wide variety of emulsifiers may be employed. Among the more suitable are: hydroxylated lecithin; mono- or diglycerides of fatty acids, such as monostearin and monopalmitin; polyoxyethylene ethers of fatty esters of polyhydric alcohols, such as the polyoxyethylene ethers of sorbitan monstearate; fatty esters of polyhydric alcohols, such as sorbitan monostearate; mono- and diesters of glycols and fatty acids, such as propylene glycol monostearate, propylene glycol monopalmitate, succinoylated monoglycerides; and the esters of carboxylic acids such as lactic, citric, and tartaric acids with the mono- and diglycerides of fatty acids such as glycerol lacto palmitate and glycerol lacto stearate. The fatty acids employed in the preparation of the emulsifiers include those derived from beef tallow coconut, cottonseed, palm, peanut, soybean, and marine oils. Preferably a combination of emulsifiers is employed; for example, combinations of polyoxyethylene sorbitan monostearate and sorbitan monostearates can be used. It is an advantage of the present invention that the amount of these emulsifiers necessary can be reduced or eliminated entirely over the amounts required in prior art whips.

The whipped compositions of the present invention optionally also may include one or more non-proteinaceous stabilizers. These stabilizers are preferably natural (i.e., vegetable) or synthetic gums and may be, for example, carrageenin, guar gum, alginate, carboxymethylcellulose, ethylcellulose ether, and the like as well as mixtures thereof. Typically, a gum or combination of gums is employed with a sugar carrier (e.g., dextrose). It is an advantage of the present invention that the amount of these stabilizers necessary can be reduced or eliminated entirely over the amounts required in prior art whips.

The stable aerated food structure is created by distributing bubbles of gas in a continuous aqueous phase. In particular, in preparing a whipped, oil-in-water emulsion system according to the present invention, an oil portion is combined with water, protein, an effective amount of a cyclodextrin, and any optional ingredients. This emulsion is cooled and passed through a whipper for the incorporation of air or an inert gas such as nitrogen, carbon dioxide, nitrous oxide, or the like. The whipper may be of conventional construction such as a Hobart mixer or a Votator heat exchanger that permits cooling of the emulsion to temperatures of about 5 to about 15°C, preferably about 10°C, during whipping. The emulsion can be whipped to an overrun of from about 75 to about 1000 percent, particularly about 100 to about 750 percent, more particularly about 100 to about 500 percent, packaged, and frozen if desired.

Whipped dalry products, such as whipped cream and the like, preferably should be whipped at or slightly above refrigerated temperature (generally about 2°C (35°F) to about 7°C (45°F)). In fact, bakers are advised to use a metal bowl and beaters, and cool both before whipping cream. This is due to the presence of milk fat, which changes its state over a narrow range of temperatures. During whipping, if the fat globules lining the bubble walls are too soft, the weight of the foam deforms them and the structure weakens. And, if a small amount of fat escapes as liquid from the globule, it will disrupt the ordered system, preventing foam from forming. In general, cream's fat globules cluster more readily at low temperatures. Lower temperatures also make the fluid more viscous and slower to drain from the foam. Cream should not be frozen prior to whipping, as freezing causes water to form ice, and this segregation of phases makes it difficult to redisperse the fat globules evenly during whipping. Above about 21 °C (70°F), even heavy creams (40 percent fat) may be too thin and their globules may be too soft to make stable foams. During aeration, the processor utilizes high turbulence to unite the gas with the aqueous phase and the dissolved/dispersed cyclodextrin stabilizer. The mixing head mechanically crushes large gas bubbles into very small ones, and the gel network formed by the emulsifiers and stabilizers provides homogeneous gas-bubble distribution at low whipping temperature. Non-frozen aerated products are ready-to-use. If frozen, the whipped product prepared in this manner remains smooth after several freeze-thaw cycles, and does not curdle upon prolonged refrigerator storage. To use the frozen, whipped products, the product is simply defrosted, for example, by being left overnight in the refrigerator.

The examples that follow are intended to further illustrate, and not limit embodiments in accordance with the invention. All publications and patent documents cited in this specification are incorporated by reference.

**Comparative Example 1: Ice Cream with Canola Oil.** Using a Cuisinart Frozen Yogurt-Ice Cream & Sorbet Maker (CIM-20), the following compositions were mixed in a 5 quart Hobart mixer with a wire whisk at speed 2 for 2 minutes before processed in the Cuisinart for 25 minutes. Canola oil was used in the same amount of milk fat present in whole milk and heavy cream. Samples were placed in plastic containers and stored in a freezer overnight.

**Table 1: Control A.**

| component | amount (g) |
|---|---|
| heavy cream | 494.1 |
| whole milk | 243.2 |
| sugar | 170.0 |
| vanilla extract | 4.0 |

Result: A stable foam having typical overrun was formed in the product.

**Table 2: Control B.**

| component | amount (g) |
|---|---|
| skim milk | 546.6 |
| canola oil | 190.7 |
| sugar | 170.0 |
| vanilla extract | 4.0 |

Result: Some foam was present, but the product was mostly liquid. Samples were then placed in plastic container and stored in a freezer overnight. After freezing overnight, sample was a solid similar to an ice cube with essentially no air entrapped therein.

**Table 3: Sample 1 (Ice Cream #1).**

| component | amount (g) |
|---|---|
| skim milk | 546.6 |
| canola oil | 190.7 |
| sugar | 170.0 |
| vanilla extract | 4.0 |
| alpha-cyclodextrin | 95.4 |

Result: Stable foam was formed. The top half layer had smaller bubble size than the bottom layer in the ice cream maker. The product was slightly grainy or powdery.

**Table 4: Sample 2 (Ice Cream #2).**

| component | amount (g) |
|---|---|
| skim milk | 546.6 |
| canola oil | 190.7 |
| sugar | 170.0 |
| vanilla extract | 4.0 |
| alpha-cyclodextrin | 63.6 |

Stable foam was formed similar to the prototype Ice Cream #1, but with more liquid in bottom of ice cream maker. It also was not as grainy or powdery as Ice Cream #1.

**Example 2.** Using a 5 quart Hobart mixer with a wire whisk, the following compositions were mixed at speed 2 for 4 minutes and then at speed 3 for 3 minutes. Control and Inventive samples were collected and placed into a 250 mL glass beaker to evaluate stability. In Table 5, skim milk is indicated as "SM", canola oil is indicated as "CO", and alpha-cyclodextrin is indicated as "αCD". CO and αCD have estimated molecular weights of about 874 and 973 g/mole, respectively.

**Table 5.**

| **Run** | **Ingredients** | α**CD:CO** | | **Overrun (%)** |
|---|---|---|---|---|
| | | **molar** | **weight** | |
| Control | 200g SM | - | - | 730 |
| Control 1 | 200g SM + 4g CO | - | - | 164 |
| Control 2 | 200g SM + 5g CO | - | - | 133 |
| Control 3 | 200g SM+10g CO | - | - | 146 |
| Inventive 1 | 200g SM + 4g CO + 4g αCD | 0.9:1 | 1:1 | 521 |
| Inventive 2 | 200g SM + 10g CO + 10g αCD | 0.9:1 | 1:1 | 506 |

The control skim milk foams (Controls 1-3) were fully collapses by 30 minutes. At 1 hour, inventive 1 foam was intact in its 250mL beaker but had about 30mL liquid collected at the bottom of beaker; inventive 2 foam was intact in its 250mL beaker but had about 20mL liquid collected at the bottom (i.e., drainage). After 2 hours, inventive 1 foam was starting to coarsen and about one-half of the foam had collapsed; foam stability of inventive foam 1 was sufficient for used in products (e.g., beverages such as cappuccinos and lattes where longer foam stability is not required. Inventive 2 foam was effectively unchanged from the sample evaluated at 1 hour.

**Example 3.** Using a 5 quart Hobart mixer with a wire whisk, the following compositions were mixed at speed 2 for 4 minutes and then at speed 3 for 3 minutes.

**Table 6.**

| **Run** | **Ingredients** | α**CD:CO** | | **Overrun** |
|---|---|---|---|---|
| | | **molar** | **weight (%)** | |
| Control | 200g SM+6.5g CO | - | - | 171 |
| 1 | 200g SM + 6.5g CO + 6.5g αCD | 0.9:1 | 1:1 | 610 |
| 2 | 200g SM + 6.5g CO + 4.875g αCD | 0.67:1 | 0.75:1 | 540 |
| 3 (Comparative) | 200g SM + 6.5g CO + 3.25g αCD | 0.45:1 | 0.5:1 | 272 |
| 4 (Comparative) | 200g SM + 6.Sg CO + 2.145g αCD | 0.3:1 | 0.33:1 | 233 |
| 5 | 200g SM + 6.5g CO + 0.65g αCD | 0.09:1 | 0.1:1 | 234 |

Samples 1 and 2 had the greatest amount of overrun as compared to the samples containing relatively larger proportions of oil than αCD.

**Example 4,** To investigate the potential effects of homogenization processing on the aerated foams of this invention, compositions were hand mixed with a wire whisk followed by either no homogenization or homogenization at 1000 psi using an AVP lab homogenizer. All samples were then treated in a 5 quart Hobart mixer with a wire whisk at speed 2 for 4 minutes and then speed 3 for 3 minutes. The following results were obtained.

**Table 7.**

| Run | Ingredients | αCD:CO | | Homogenized | Overrun (%) |
|---|---|---|---|---|---|
| | | molar | weight | | |
| Control A | 200g SM + 6.5g CO | - | - | no | 48 |
| Control B | 200g SM + 6.5g CO | - | - | yes | 59 |
| Sample 1A | 200g SM + 6.5g CO + 6.5g αCD | 0.9:1 | 1:1 | no | 378 |
| Sample 1B | 200g SM + 6.5g CO + 6.5g αCD | 0.9:1 | 1:1 | yes | 309 |

Reducing the particle size of the control or inventive sample via homogenization did not improve the foamability. The results suggest in improvement in foamability was due to the addition of αCD.

**Example 5.** The effect of αCD concentration on the foaming capacity was further investigated in the following series of runs. Using a 5 qt Hobart mixer with a wire whisk, the following compositions were mixed at speed 2 for 4 minutes and then at speed 3 for 3 minutes.

**Table 8.**

| **Run** | **Ingredients** | α**CD:CO** | | **Ovemun (%)** |
|---|---|---|---|---|
| | | **molar** | **weight** | |
| Control | 200g SM + 6.5g CO | - | - | 60 |
| 1 | 200g SM + 6.5g CO + 6.5g αCD | 0.9:1 | 1:1 | 340 |
| 2 | 200g SM + 6.5g CO + 13g αCD | 1.8:1 | 2:1 | 803 |
| 3 | 200g SM + 6.6g 00 + 26 αCD | 3.8:1 | 4:1 | 1000 |

Foaming capacity increases with increasing αCD to Canola oil ratio, the foam capacity increases similarly. The addition of αCD did not, however, significantly increase the viscosity of the solution.

**Example 6.** Using a 5 quart Hobart mixer with a wire whisk, the following compositions were mixed at speed 2 for 4 minutes and then speed 3 for 3 minutes. Except for the control, the compositions contained skim milk, medium chain triglycerides ("MCT"), and αCD. The MCT was composed of C6, C8, C10, and C12 C5 fatty acid residues and had an estimated molecular weight of about 210 g/mole (M-5 from Stephan Chemical).

**Table 9.**

| **Run** | **Ingredients** | **αCD:MCT** | | **Overrun (%)** |
|---|---|---|---|---|
| | | **molar** | **weight** | |
| Control | 200g SM + 6.5g MCT | - | - | 18 |
| 1 | 200g SM + 6.5g MCT + 30.1g αCD | 1:1 | 4.6:1 | 275 |
| 2 (Comparative) | 200g SM + 6.5g MCT + 6.5g αCD | 0.22:1 | 1:1 | 40 |
| 3 (Comparative) | 200g SM + 6.5g MCT + 4.875 αCD | 0.16:1 1 | 0.75:1 | 19 |
| 4 (Comparative) | 200g SM + 6.5g MCT + 2.145 αCD | 0.07:1 | 0.33:1 | 20 |

The only sample to demonstrate significant amount of overrun was the sample containing 4.6:1 weight ratio of αCD to MCT (i.e., a 1:1 mole ratio of αCD:MDT).

**Example 7.** This example illustrates that the use of monoglycerides as the sole fat source does not provide a suitable foamed product. Using a 5 quart Hobart mixer with a vare whisk, the following compositions were mixed at speed 2 for 4 minutes and then speed 3 for 3 minutes. Acetylated monoglycerides ("ACG", Acetem 95-50 (Dansico); average molecular weight of about 342 g/mole) was included in a test sample without αCD and In different ratios with αCD in other samples to evaluate the foaming capacity of αCD in the presence thereof.

**Table 10.**

| **Run** | **Ingredients** | α**CD:ACG** | | **Overrun (%)** |
|---|---|---|---|---|
| | | **molar** | **weight** | |
| Control | 200g SM + 6.5g ACG | - | - | 18 |
| 1 (Comparative) | 200g SM + 6.5g ACG + 6.5g αCD | 0.35:1 | 1:1 | 18 |
| 2 | 200g SM + 6.5g ACG + 21.6g αCD | 1.6:1 | 4.6:1 | 21 |

As shown by the results, neither sample using acetylated monoglycerides In combination with αCD, in different ratios, was able to produce any significant overrun versus the control.

**Example 8.** This example also illustrates that the use of monoglycerides as the sole fat source does not provide a suitable foamed product. Using a 5 quart Hobart mixer with a wire whisk at speed 2, the following compositions were mixed at speed 2 for 4 minutes and then speed 3 for 3 minutes. Another source of acetylated monoglycaride ("AMG*", Myvacet 9-45K (Quest) with a molecular weight of about 342 g/mole) was included In a test sample without αCD and in different ratios with αCD In other samples to evaluate the foaming capacity of αCD in the presence thereof.

**Table 11.**

| **Run** | **Ingredients** | **αCD:ACG** | |
|---|---|---|---|
| | | **molar** | **weight** |
| Control | 200g SM + 6.5g AMG* | - | - |
| 1 (Comparative) | 200g SM + 6.5g AMG* + 6.5g αCD | 0.35:1 | 1:1 |
| 2 | 200g SM + 6.5g AMG* + 21.6g αCD | 1.6:1 | 4.6:1 |

Similar to the results of Example 7, none of the three samples foamed or formed any significant amount of foam.

**Example 9.** Using a 5 quart Hobart mixer with a wire whisk, the following compositions were mixed at speed 2 for 4 minutes and then speed 3 for 3 minutes. Egg white powder (EWP) and canola oil were included in test samples with and without αCD to evaluate the foaming capacity of αCD in the presence thereof.

**Table 12.**

| **Run** | **Ingredients** | **αCD:CO** | | **Ovenrun(%)** |
|---|---|---|---|---|
| | | **molar** | **weight** | |
| Control | 3g EGP + 187g water + 6.5g CO | - | - | 42 |
| 1 | 13g EGP + 187g water 6.5g CO + 6.5g αCD | 1.8:1 | 2:1 | 92 |

Similar to the use of skim milk/dairy proteins, this example demonstrates that αCD can help stabilize other protein stabilized foam systems, such as egg whites, which are known to be highly susceptible defoaming in the presence of lipids.

**Example 10.** Using a 5 quart Hobart mixer with a wire whisk, the following compositions were mixed at speed 2 for 4 minutes and then speed 8 for 3 minutes. Skim milk (SM) and diacylgicerol (DAG; Enova^{™} oil from ADM Kao LLC, Decatur, IL; average molecular weight of about 607 g/mole) were included in a control sample without αCD and in samples with varying amounts of αCD.

**Table 13.**

| **Run** | **Ingredients** | **αCD:DAG** | | **Overrun (%)** |
|---|---|---|---|---|
| | | **molar** | **weight** | |
| Control | 200g SM + 6.5g DAG | - | - | 0 |
| 1 | 200g SM + 6.5g DAG + 10.5g αCD | 1:1 | 1.615:1 | 385 |
| 2 (Comparative) | 200g SM + 6.5g DAG + 6.5g αCD | 0.6:1 | 1:1 | 41 |
| 3 (Comparative) | 200g SM + 6.5g DAG + 4.88g αCD | 0.47:1 | 0.75:1 | 28 |
| 4 (comparative) | 200g SM + 6.5g DAG + 2.15g αCD | 0.2:1 | 0.33:1 | 0 |

Only Sample 2 (a 1:1 molar ratio of αGD:DAG) demonstrated a significant overrun.

**Example 11.** Using a 5 quart Hobart mixer with a wire whisk, the following compositions were mixed at speed 2 for 4 minutes and then speed 3 for 3 minutes. Skim milk (SM) and canola oil (CO) were included in a control sample without CD and in samples with varying amounts of alpha-cyclodextrin (αCD), beta-cyclodextrin (βCD), and gamma-cyclodextrin (γCD). The average molecular weights of alpha-cyclodextrin, beta-cyctodoxtrin and gamma-cyclodextrin were 973, 1135, and 1297 g/mole respectively.

**Table 14.**

| Run | Ingredients | CD:CO | | Overrun (%) |
|---|---|---|---|---|
| | | molar | weight | |
| Control | 200g SM+6.5g CO | - | - | 0 |
| 1 | 200g SM + 6.5g CO + 6.5g βCD | 0.77:1 | 1:1 | 402 |
| 2 | 200g SM + 6.5g CO +9g βCD | 1.06:1 | 1.38:1 | 381 |
| 3 | 200g SM + 6.5g CO + 6.5g γCD | 0.67:1 | 1:1 | 276 |
| 4 | 200g SM + 6.5g CO + 10g γCD | 1.06:1 | 1,58:1 | 288 |
| 5 | 200g SM + 6.5g CO + 8.6g αCD | 0.9:1 | 1:1 | 340 |

Alpha-cyclodextrin, beta-cyclodextrin, and gamma-cyclodextrin provided significant overrun values.

While the Invention has been particularly described with specific reference to particular process and product embodiments, it will be appreciated that various alterations, modifications and adaptations may be based on the present disclosure, and are intended to be within the scope of the present invention as defined by the following claims.

## Claims

1. An aerated food composition comprising: 2 to 4 percent protein, 2 to 3.5 percent oil, 2 to 10 percent cyclodextrin and 82.5 to 94 percent water (total) and wherein the composition contains at least 0.65:1 molar ratio of cyclodextrin to oil.

2. The aerated food composition of Claim 1, wherein said composition comprises an oil-in-water emulsion.

3. The aerated food composition of Claim 1 or 2, wherein the cyclodextrin comprises alpha-cyclodextrin

4. The aerated food composition of any one of Claims 1 to 3, wherein the composition contains 0.9:1 to about 4:1 molar ratio of cyclodextrin to oil.

5. The aerated food composition of any one of Claims 1 to 4, wherein the food composition comprises a dairy product.

6. The aerated food composition of Claim 5, wherein the dairy product is selected from the group consisting of whipped cream, cream cheese, mousse, yogurt and ice cream.

7. The aerated food composition of any one of Claims 1 to 6, wherein the oil is selected from the group consisting of glyceride, sterol and fat mimetic.

8. The aerated food composition of Claim 7, wherein the oil comprises a glyceride.

9. The aerated food composition of any one of Claims 1 to 6, wherein the oil is selected from the group consisting of an unsaturated liquid fatty acid, a liquid glyceride having at least one unsaturated fatty acid residue, or a combination thereof.

10. The aerated food composition of Claim 8 or 9, wherein the glyceride is selected from the group consisting of a triacylglycerol, a diacylglycerol, and a combination thereof.

## Patentansprüche

1. Aufgeschäumte Lebensmittelzusammensetzung, die Folgendes umfasst: 2 bis 4 Prozent Protein, 2 bis 3,5 Prozent Öl, 2 bis 10 Prozent Cyclodextrin und 82,5 bis 94 Prozent Wasser (gesamt) und wobei die Zusammensetzung ein Molverhältnis von Cyclodextrin zu Öl von mindestens 0,65:1 enthält.

2. Aufgeschäumte Lebensmittelzusammensetzung nach Anspruch 1, wobei die genannte Zusammensetzung eine Emulsion von Öl in Wasser umfasst.

3. Aufgeschäumte Lebensmittelzusammensetzung nach Anspruch 1 oder 2, wobei das Cyclodextrin alpha-Cyclodextrin umfasst.

4. Aufgeschäumte Lebensmittelzusammensetzung nach einem der Ansprüche 1 bis 3, wobei die Zusammensetzung ein Molverhältnis von Cyclodextrin zu Öl von 0,9:1 bis ungefähr 4:1 enthält.

5. Aufgeschäumte Lebensmittelzusammensetzung nach einem der Ansprüche 1 bis 4, wobei die Lebensmittelzusammensetzung ein Molkereiprodukt umfasst.

6. Aufgeschäumte Lebensmittelzusammensetzung nach Anspruch 5, wobei das Molkereiprodukt aus der aus Schlagsahne, Frischkäse, Mousse, Yoghurt und Eiskrem bestehenden Gruppe gewählt wird.

7. Aufgeschäumte Lebensmittelzusammensetzung nach einem der Ansprüche 1 bis 6, wobei das Öl aus der aus Glycerid, Sterol und Fettersatzstoff bestehenden Gruppe gewählt wird.

8. Aufgeschäumte Lebensmittelzusammensetzung nach Anspruch 7, wobei das Öl ein Glycerid umfasst.

9. Aufgeschäumte Lebensmittelzusammensetzung nach einem der Ansprüche 1 bis 6, wobei das Öl aus der aus einer ungesättigten flüssigen Fettsäure, einem flüssigen Glycerid mit mindestens einem ungesättigten Fettsäurerückstand und einer Kombination derselben bestehenden Gruppe gewählt wird.

10. Aufgeschäumte Lebensmittelzusammensetzung nach Anspruch 8 oder 9, wobei das Glycerid aus der aus einem Triacylglycerol, einem Diacylglycerol und einer Kombination derselben bestehenden Gruppe gewählt wird.

## Revendications

1. Composition alimentaire aérée comprenant : de 2 à 4 pour cent de protéine, de 2 à 3,5 pour cent d'huile, de 2 à 10 pour cent de cyclodextrine et de 82,5 à 94 pour cent d'eau (total) et dans lequel la composition contient un rapport molaire cyclodextrine/huile d'au moins 0,65:1.

2. Composition alimentaire aérée selon la revendication 1, ladite composition comprenant une émulsion huile dans l'eau.

3. Composition alimentaire aérée selon la revendication 1 ou 2, dans laquelle la cyclodextrine comprend de l'alpha-cyclodextrine.

4. Composition alimentaire aérée selon l'une quelconque des revendications 1 à 3, la composition contenant un rapport molaire cyclodextrine/huile de 0,9:1 à environ 4:1.

5. Composition alimentaire aérée selon l'une quelconque des revendications 1 à 4, la composition alimentaire comprenant un produit laitier.

6. Composition alimentaire aérée selon la revendication 5, dans laquelle le produit laitier est sélectionné dans le groupe consistant en crème fouettée, fromage à la crème, mousse, yaourt et crème glacée.

7. Composition alimentaire aérée selon l'une quelconque des revendications 1 à 6, dans laquelle l'huile est sélectionnée dans le groupe consistant en glycéride, stérol et succédané de matière graisse.

8. Composition alimentaire aérée selon la revendication 7, dans laquelle l'huile comprend un glycéride.

9. Composition alimentaire aérée selon l'une quelconque des revendications 1 à 6, dans laquelle l'huile est sélectionnée dans le groupe consistant en un acide gras liquide insaturé, un glycéride liquide ayant au moins un résidu d'acide gras insaturé, ou une combinaison de ceux-ci.

10. Composition alimentaire aérée selon la revendication 8 ou 9, dans laquelle le glycéride est sélectionné dans le groupe consistant en un triacylglycérol, un diacylglycérol et une combinaison de ceux-ci.
